(19) Europäisches Patentamt
European Patent Office
Office européen des brevets

(11) **EP 1 380 124 B1**

(12) **EUROPÄISCHE PATENTSCHRIFT**

(45) Veröffentlichungstag und Bekanntmachung des Hinweises auf die Patenterteilung:
**30.08.2006 Patentblatt 2006/35**

(21) Anmeldenummer: **02737773.8**

(22) Anmeldetag: **05.04.2002**

(51) Int Cl.:
**H04B 7/26** (2006.01)

(86) Internationale Anmeldenummer:
**PCT/DE2002/001259**

(87) Internationale Veröffentlichungsnummer:
**WO 2002/087264 (31.10.2002 Gazette 2002/44)**

(54) **VERFAHREN UND VORRICHTUNG ZUM ÜBERTRAGEN DER DATEN EINES TEILNEHMERSPEZIFISCHEN STEUERKANALS IN EINEM FUNKSYSTEM**

METHOD AND DEVICE FOR TRANSMITTING DATA OF A SUBSCRIBER-SPECIFIC CONTROL CHANNEL IN A RADIO SYSTEM

PROCEDE ET DISPOSITIF POUR TRANSMETTRE LES DONNEES D'UN CANAL DE COMMANDE SPECIFIQUE A UN ABONNE DANS UN SYSTEME RADIO

(84) Benannte Vertragsstaaten:
**DE FR GB IT**

(30) Priorität: **20.04.2001 DE 10119449**

(43) Veröffentlichungstag der Anmeldung:
**14.01.2004 Patentblatt 2004/03**

(73) Patentinhaber: **SIEMENS AKTIENGESELLSCHAFT**
**80333 München (DE)**

(72) Erfinder: **NASSHAN, Markus**
**85435 Erding (DE)**

(56) Entgegenhaltungen:
**WO-A-00/02401          US-A- 5 442 809**
**US-A- 6 047 187**

**Beschreibung**

Die vorliegende Erfindung betrifft ein Verfahren sowie eine entsprechend ausgestaltete Vorrichtung zum Übertragen der Daten eines teilnehmerspezifischen Steuerkanals in einem Funksystem. Insbesondere betrifft die vorliegende Erfindung ein derartiges Verfahren sowie eine entsprechend ausgestaltete Vorrichtung zum Übertragen der Daten eines teilnehmerspezifischen Steuerkanals, welcher unterschiedliche Symbole mit Steuerfunktionen, wie beispielsweise Symbole zur Schätzung der Übertragungseigenschaft des jeweiligen Übertragungskanals, Symbole zur Leitungsregelung oder Symbole mit einer Information zur Formatangabe, umfasst, in einem Funksystem, insbesondere einem Mobilfunksystem.

Die Funktionalität eines Senders oder Empfängers, wie beispielsweise einer Mobilstation oder einer Basisstation in einem Mobilfunksystem, werden in Funksystemen in der Regel in Form eines Schichtenmodells beschrieben, wobei die unterschiedlichen Funktionalitäten des jeweiligen Senders bzw. Empfängers unterschiedlichen Schichten ("Layer") zugewiesen sind. Dabei werden in Funksystemen über die Luftschnittstelle (Schicht 1) Daten höherer Schichten (Schichten 2, 3 oder höher) übertragen. Charakteristisch für Funksysteme ist, dass die Luftschnittstelle des jeweiligen Senders bzw. Empfängers den Engpass hinsichtlich Datenrate (kbit/s) und Übertragungskapazität (bit/s/Hz) darstellt. Neue Funksysteme müssen deshalb so entworfen und betrieben werden, dass die Luftschnittstelle möglichst optimal konfiguriert ist. Optimierungskriterien können dabei beispielsweise die maximale Datenrate eines oder mehrerer Teilnehmer, die spektrale Kapazität einer einzelnen Funkzelle oder des gesamten Funksystems etc. sein. Dabei ist eine adaptive Konfigurierbarkeit der Luftschnittstelle wünschenswert, da eine optimale bzw. optimierte Konfiguration der Luftschnittstelle von vielen Parametern abhängt, wie z.B. die Umgebung bzw. Eigenschaft der Übertragungskanäle, die Art der Funkzellen, die Art des angewendeten Vielfachzugriffsverfahrens (TDD ("Time Division Duplex") oder FDD ("Frequency Division Duplex")), die augenblickliche Geschwindigkeit des jeweiligen Teilnehmers, die Datenrate, die Systemauslastung und die Art der Datenübertragung (z.B. paketorientiert oder kontinuierlich etc.). Dabei ist die Konfiguration der Luftschnittstelle im Allgemeinen teilnehmerspezifisch ("Dedicated") und abhängig von den zuvor genannten Parametern.

In UMTS-Mobilfunksystemen ("Universal Mobile Telecommunication System") wird zur Konfiguration der Luftschnittstelle des jeweiligen Empfängers ein teilnehmerspezifischer Steuerkanal verwendet, der als "Dedicated Physical Control Channel" (DPCCH) bezeichnet wird. Mit Hilfe dieses DPCCH-Kanals werden an den jeweiligen Empfänger Informationen übertragen, welcher dieser zur Konfiguration seiner Luftschnittstelle verwenden kann. Insbesondere enthält dieser DPCCH-Kanal Datenblöcke mit $N_{pilot}$ Pilotsymbolen zur Schätzung der Übertragungseigenschaft des jeweiligen Funkkanals, $N_{TPC}$ TPC-Symbolen ("Transmit Power Control") mit Informationen zur Leistungsregelung und $N_{TFI}$ TFI-Symbolen ("Transmit Format Indicator") mit Informationen zur Formatangabe bzw. zur Kombination der zu übertragenden Dienste (Sprache, "Circuit Switched"-Daten, Paketdaten etc.).

Je nach Kombination der zuvor genannten Parameter werden unterschiedlich viele Symbole für die einzelnen Datenblöcke des DPCCH-Kanals benötigt.

Für die Übertragung des DPCCH-Kanals im FDD-Modus von UMTS-Mobilfunksystemen ist bekannt, den DPCCH-Kanal im Downlink, d.h. bei Übertragung von einer Basisstation zu einer Mobilstation, bestehend aus jeweils einem Datenblock mit PilotSymbolen, TPC-Symbolen und TFI-Symbolen gemäß einem Zeit-Multiplex-Verfahren mit dem entsprechenden teilnehmerspezifischen Datenkanal ("Dedicated Physical Data Channel", DPDCH) zu übertragen. D.h. die Daten des DPDCH-Kanals und die Daten des DPCCH-Kanals werden zeitlich aufeinanderfolgend übertragen. Im Uplink, d.h. bei Übertragung von einer Mobilstation zu einer Basisstation, erfolgt hingegen eine sogenannte I-Q-Multiplexkombination des DPCCH- und DPDCH-Kanals.

Bezüglich der Übertragung des DPCCH-Kanals wurde bereits vorgeschlagen, die Anzahl der Pilot-Symbole, TPC-Symbole und TFI-Symbole variabel zu gestalten. Insbesondere wurde bereits vorgeschlagen, während einer bestehenden Verbindung die Werte $N_{pilot}$, $N_{TPC}$ und $N_{TFI}$ durch eine Schicht2/3-Signalisierung, welche über den DPDCH-Kanal übertragen wird, adaptiv zu ändern bzw. zu optimieren.

Der vorliegenden Erfindung liegt nunmehr die Aufgabe zugrunde, ein alternatives Verfahren sowie eine entsprechend ausgestaltete Vorrichtung zum Übertragen der Daten eines teilnehmerspezifischen Steuerkanals in einem Funksystem, wie z.B. des DPCCH-Kanals in einem UMTS-Mobilfunksystem, vorzuschlagen, so dass eine möglichst große Flexibilität bei der Übertragung der Daten des teilnehmerspezifischen Steuerkanals gegeben ist, um je nach Kombination der eingangs beschriebenen Parameter, von welchen die Konfiguration der Luftschnittstelle in einem Sender bzw. Empfänger des Funksystems abhängt, möglichst schnell darauf reagieren und eine entsprechend optimierte Konfiguration der Luftschnittstelle realisieren zu können.

Diese Aufgabe wird erfindungsgemäß durch ein Verfahren mit den Merkmalen des Anspruches 1 bzw. eine Vorrichtung mit den Merkmalen des Anspruches 17 gelöst. Die Unteransprüche definieren jeweils bevorzugte und vorteilhafte Ausführungsformen der vorliegenden Erfindung.

Erfindungsgemäß wird vorgeschlagen, die Daten des teilnehmerspezifischen Steuerkanals mit adaptiv veränderbarer Frequenzlage bzw. Bandbreite zu übertragen, d.h. der teilnehmerspezifische Steuerkanal wird adaptiv im Frequenzbereich realisiert.

Bei dem teilnehmerspezifischen Steuerkanal kann es sich beispielsweise in Mobilfunksystemen, wie z.B. gemäß dem UMTS-Mobilfunkstandard, um den sogenannten DPCCH-Kanal handeln, welcher sowohl Pilot-Symbole zur Kanalschätzung als auch TPC-Symbole zur Leistungsregelung und TFI-Symbole zur Formatangabe aufweist. Jeder dieser Datenblöcke kann mit einer adaptiven Bandbreite oder Frequenzlage übertragen werden, d.h. während einer bestehenden Verbindung ist es möglich, durch eine entsprechende Schicht2/3-Signalisierung, welche vorzugsweise über den entsprechenden teilnehmerspezifischen Datenkanal, wie z.B. dem DPDCH-Kanal im UMTS-Mobilfunksystemen, übertragen wird, adaptiv zu ändern bzw. zu optimieren.

Dabei kann die einem Teilnehmer insgesamt zur Verfügung gestellte Bandbreite sowohl konstant als auch ebenfalls variabel sein.

Den einzelnen Datenblöcken können dabei Frequenzspektren zugewiesen werden, welche nicht notwendigerweise zusammenhängend sein müssen. Diesbezüglich werden verschiedene Ausführungsvarianten der vorliegenden Erfindung vorgestellt, welche abhängig von den Betriebsbedingungen des jeweiligen Funksystems, d.h. abhängig von der augenblicklichen Kombination der eingangs beschriebenen Parameter, durch eine entsprechende Schicht2/3-Signalisierung eingestellt werden können.

Als Vielfachzugriffsverfahren für Mobilfunksysteme der vierten Generation wird das sogenannte OFDM-Verfahren ("Orthogonal Frequency Division Multiplexing") bevorzugt. Dabei werden Datenblöcke bzw. Datenbursts zyklisch erweitert und im Frequenzbereich moduliert. Durch Anwendung des OFDM-Verfahrens kann ein Übertragungskanal, welcher bei herkömmlichen Übertragungsverfahren relativ starke Verzerrungen aufweist, in einen Kanal ohne Intersymbolinterferenzen überführt werden.

Bei Anwendung eines OFDM-Verfahrens werden die Daten sowohl des teilnehmerspezifischen Datenkanals (DPDCH) als auch die Daten des teilnehmerspezifischen Steuerkanals (DPCCH) mit einer Vielzahl von Subträgern übertragen, welche auch als OFDM-Träger ("OFDM-Carrier") oder Sinuide bezeichnet werden. Die erfindungsgemäß vorgeschlagene Übertragung des teilnehmerspezifischen Steuerkanals mit variabler bzw. adaptiv anpassbarer Bandbreite oder Frequenzlage kann einfach dadurch realisiert werden, dass die für die einzelnen Datenblöcke jeweils verwendete Anzahl und Anordnung der Subträger entsprechend variiert wird.

Auch für die Übertragung der Daten gemäß dem OFDM-Verfahren werden verschiedene Ausführungsvarianten vorgeschlagen, welche abhängig von der Betriebssituation beliebig gewählt werden können.

Die vorliegende Erfindung wird nachfolgend näher unter Bezugnahme auf die beigefügte Zeichnung anhand vorteilhafter und bevorzugter Ausführungsbeispiele beschrieben. Dabei wird insbesondere die vorliegende Erfindung unter der Annahme erläutert, dass die Übertragung der Daten des teilnehmerspezifischen Steuerkanals und des teilnehmerspezifischen Datenkanals in einem UMTS-Mobilfunksystem erfolgt. Selbstverständlich ist die vorliegende Erfindung jedoch nicht auf diesen Anwendungsbereich beschränkt, sondern kann grundsätzlich in jedem Funksystem angewendet werden, bei dem von einem Sender an einen Empfänger ein teilnehmerspezifischer Steuerkanal, welcher für den Empfänger bestimmte Steuerinformationen enthält, übertragen wird.

Figur 1A - 1E zeigen verschiedene Ausführungsbeispiele für eine erfindungsgemäße Variation der Bandbreite bzw. Frequenzlage für die Übertragung eines DPCCH-Kanals und eines DPDCH-Kanals,

Figur 2A und Figur 2B zeigen verschiedene Ausführungsbeispiele für eine erfindungsgemäße Variation der für den DPDCH-Kanal und den DPCCH-Kanal zur Verfügung gestellten Bandbreite bzw. Frequenzlage bei Anwendung eines OFDM-Verfahrens, wobei die Daten jeweils mit einer Vielzahl von Subträgern übertragen werden, und

Figur 3 zeigt ein vereinfachtes Blockschaltbild eines erfindungsgemäßen Mobilfunksystems.

Erfindungsgemäß wird vorgeschlagen, die Übertragung des teilnehmerspezifischen Steuerkanals, d.h. des DPCCH-Kanals ("Dedicated Physical Control Channel"), adaptiv im Frequenzbereich derart zu realisieren, dass die Daten des DPCCH-Kanals mit adaptiv veränderbarer Bandbreite oder Frequenzlage übertragen werden. Dabei kann die Frequenzlage bzw. Bandbreite der einzelnen Datenblöcke des DPCCH-Kanals individuell angepasst werden, d.h. es kann die Frequenzlage oder Bandbreite der Pilot-Symbole, welche zur empfängerseitigen Kanalschätzung dienen, die Frequenzlage oder Bandbreite der TPC-Symbole, welcher zur empfängerseitigen Leistungsregelung dienen, die Frequenzlage oder Bandbreite der TFI-Symbole, welche zur Übermittlung einer Formatangabe dienen, und/oder die Frequenzlage bzw. Bandbreite von sonstigen Symbolen des DPCCH-Kanals individuell angepasst werden, um somit eine optimierte Konfiguration der Luftschnittstelle zu ermöglichen. Nachfolgend wird mit $B_{pilot}$ die Bandbreite bzw. Frequenzlage der Pilot-Symbole, mit $B_{TPC}$ die Bandbreite der TPC-Symbole, mit $B_{TFI}$ die Bandbreite der TFI-Symbole und mit $B_{sonst}$ die Bandbreite der sonstigen Symbole des DPCCH-Kanals bezeichnet.

Während einer bestehenden Verbindung können die Werte für $B_{pilot}$, $B_{TPC}$, $B_{TFI}$ und $B_{sonst}$ durch eine entsprechende Schicht 2/3-Signalisierung, welche über den entsprechenden teilnehmerspezifischen Datenkanal ("Dedicated Physical Data Channel"), DPDCH übertragen wird, adaptiv geändert bzw. optimiert werden. Die einem Teilnehmer insgesamt zur Verfügung gestellte Bandbreite $B_{gesamt}$ kann sowohl konstant oder ebenfalls variabel sein. Dabei ist die einem Teilnehmer insgesamt zur Verfügung gestellte Bandbreite $B_{gesamt}$ wie folgt definiert:

$$B_{gesamt} = B_{DPCCH} + B_{DPDCH} = B_{pilot} + B_{TPC} + B_{TFI} + B_{sonst} + B_{DPDCH}.$$

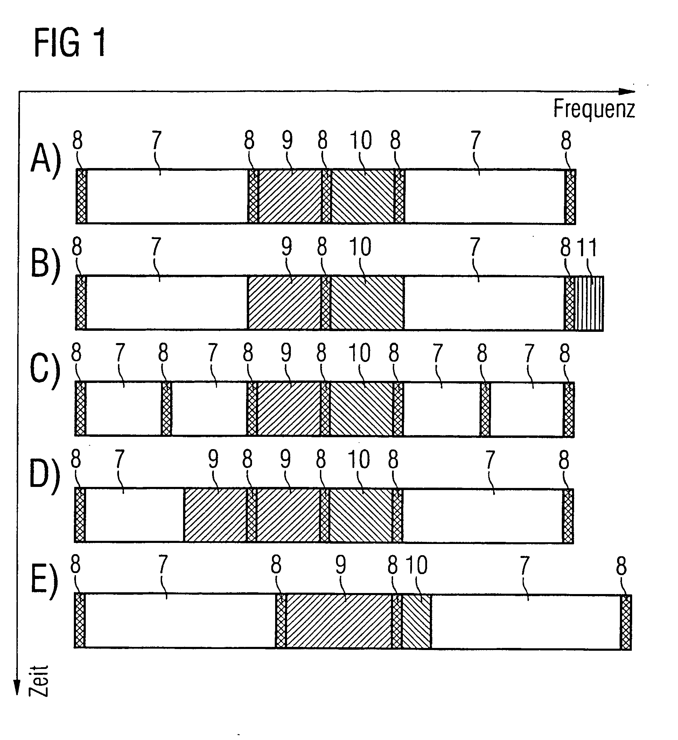

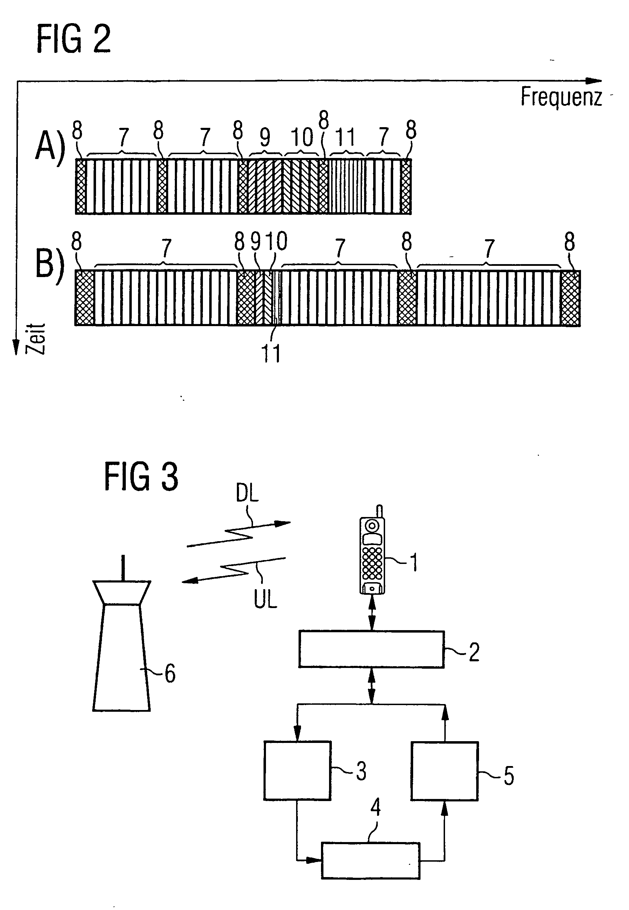

Dabei bezeichnet $B_{DPCCH}$ die Gesamtbandbreite zur Übertragung der Symbole des DPCCH-Kanals und $B_{DPDCH}$ die Gesamtbandbreite zur Übertragung der Symbole des DPDCH-Kanals. Die für $B_{pilot}$, $B_{TPC}$, $B_{TFI}$ und $B_{sonst}$ zugeteilten Frequenzspektren eines Teilnehmers können auch nicht zusammenhängend sein, wie aus der nachfolgenden Beschreibung unterschiedlicher Ausführungsbeispiele unter Bezugnahme auf Figur 1 und Figur 2 ersichtlich ist.

Zunächst soll jedoch unter Bezugnahme auf Figur 3 die grundsätzliche Wirkungsweise der vorliegenden Erfindung erläutert werden, wobei davon ausgegangen wird, dass es sich bei dem Funksystem um ein Mobilfunksystem mit einer Kommunikation zwischen einer Mobilstation 1, im dargestellten Ausführungsbeispiel in Form eines Mobiltelefons, und einer Basisstation 6 handelt. Darüber hinaus wird davon ausgegangen, dass es sich bei der Mobilstation 1 um eine erfindungsgemäß ausgestaltete Vorrichtung handelt, welche an die Basisstation 6 eien teilnehmerspezifischen Steuerkanal bzw. DPDCH-Kanal mit adaptiv veränderbarer Frequenzlage oder Bandbreite überträgt. Die Kommunikation von der Mobilstation 1 zu der Basisstation 6 erfolgt über den sogenannten Uplink UL, während die Kommunikation von der Basisstation 6 zu der Mobilstation 1 über den sogenannten Downlink DL erfolgt. Die Mobilstation 1 empfängt von der Basisstation 6 über den Downlink mit Hilfe einer entsprechenden Schicht2/3-Signalisierung, welche über den DPDCH-Kanal des Downlinks DL übertragen wird, eine Information, wie die Bandbreite oder Frequenzlage der einzelnen Daten des an die Basisstation 6 zu übertragenden DPCCH-Kanals einzustellen ist. Diese Information wird über die Luftschnittstelle 2 der Mobilstation 1 dem Empfangsteil 3 der Mobilstation 1 zugeführt und von einer Steuereinheit 4 ausgewertet. In Abhängigkeit von der Auswertung dieser Information steuert die Steuereinheit 4 ein Sendeteil 5 der Mobilstation 1 an, um entsprechend die Bandbreite bzw. Frequenzlage des DPCCH-Kanals oder der einzelnen Datenblöcke dieses DPCCH-Kanals einzustellen. Die Information, welcher durch die Mobilstation 1 von der Basisstation 6 empfangen wird, kann derart beschaffen sein, dass sie eine bestimmte von mehreren möglichen Konstellationen der Frequenzlagen bzw. Bandbreiten der einzelnen Datenblöcke des DPCCH-Kanals auswählt. Ebenso kann die Information jedoch auch so beschaffen sein, dass sie lediglich für einen einzelnen Datenblock, beispielsweise lediglich für die Pilot-Symbole, des DPCCH-Kanals die Frequenzlage oder Bandbreite vorgibt. Da sich jedoch in der Regel die Veränderung der Bandbreite eines Datenblocks auch auf die Bandbreiten der anderen Datenblöcke auswirkt, ist es vorteilhaft, wenn in der Mobilstation 1 bzw. dem entsprechenden Sendeteil 5 eine Vielzahl von unterschiedlichen Konstellationen für die Bandbreiten der einzelnen Datenblöcke des DPCCH-Kanals gespeichert sind, welche dann nur noch in Abhängigkeit von der empfangenen Information ausgelesen und umgesetzt werden müssen.

Nach Einstellung der Bandbreite des DPCCH-Kanals bzw. der einzelnen Datenblöcke des DPCCH-Signals werden die Daten des DPCCH-Kanals über die Luftschnittstelle 2 an die Basisstation 6 übertragen.

In Figur 1 sind verschiedene Ausführungsbeispiele für die Übertragung des DPCCH-Kanals dargestellt, wobei die einem Teilnehmer sowohl für den DPCCH-Kanal als auch für den DPDCH-Kanal zur Verfügung gestellte Bandbreite oder Frequenzlage von Figur 1A - Figur 1E variiert wird. Dies wird - wie bereits erläutert worden ist - dem Teilnehmer während einer Verbindung über eine entsprechende Schicht2/3-Signalisierung mit Hilfe eines-empfangenen DPDCH-Kanals signalisiert.

Dabei sind die Daten des DPDCH-Kanals jeweils mit dem Bezugszeichen 7, die Pilot-Symbole des DPCCH-Kanals jeweils mit dem Bezugszeichen 8, die TPC-Symbole des DPCCH-Kanals jeweils mit dem Bezugszeichen 9, die TFI-Symbole des DPCCH-Kanals jeweils mit dem Bezugszeichen 10 und sonstige Symbole des DPCCH-Kanals mit dem Bezugszeichen 11 versehen.

Es sei angenommen, dass der in Figur 1A dargestellte Fall die Ausgangssituation darstellt. Dabei werden für den DPDCH-Kanal 7 zwei Frequenzbänder verwendet, während für die Pilot-Symbole 8 des DPCCH-Kanals fünf Frequenzbänder und jeweils ein Frequenzband für die TPC- und TFI-Symbole des DPCCH-Kanals verwendet werden.

Bei dem in Figur 1B dargestellten Fall werden im Vergleich zu Figur 1A zwei der fünf Frequenzbänder der Pilot-Symbole 8 jeweils zu gleichen Teilen den Frequenzbändern für die TPC-Symbole 9 und die TFI-Symbole 10 zugeschlagen. Der in Figur 1B dargestellte Fall ist beispielsweise dann sinnvoll, wenn die Kohärenzbandbreite des Funk- oder Übertragungskanals deutlich größer als bei dem in Figur 1A dargestellten Fall ist. Dann genügen die gemäß Figur 1B verwendeten Frequenzbänder für die Pilot-Symbole 8 am Anfang und Ende des Gesamtfrequenzbandes. Darüber hinaus wird gemäß Figur 1B ein zusätzliches Frequenzband für die Übertragung von sonstigen Daten 11 des DPCCH-Kanals zur Verfügung gestellt, so dass die dem Teilnehmer insgesamt zur Verfügung gestellte Bandbreite größer als in Figur 1A ist.

Bei dem in Figur 1C dargestellten Fall werden im Vergleich zu Figur 1A weitere Frequenzbänder für die Pilot-Symbole 8 eingefügt. Dies geht auf Kosten der Bandbreite für die Daten 7 des DPDCH-Kanals. Der in Figur 1C dargestellte Fall kann insbesondere bei Funkkanälen mit deutlich kleinerer Kohärenzbandbreite als bei den in Figur 1A und Figur 1B dargestellten Fällen zum Einsatz kommen.

Gemäß Figur 1D wird im Vergleich zu Figur 1A ein zweites Frequenzband für die Übertragung der TPC-Symbole 9 verwendet. Auf diese Weise kann erreicht werden, dass die TPC-Symbole gegenüber Figur 1A mit deutlich höherer Zuverlässigkeit bzw. deutlich höherem Fehlerschutz übertragen werden können. Auch bei dem in Figur 1D dargestellten Fall geht das für die TPC-Symbole 9 zusätzlich verwendete Frequenzband auf Kosten der Daten des DPDCH-Kanals 7, insbesondere auf Kosten des ersten Frequenzbandes des DPDCH-Kanals.

Bei dem in Figur 1E dargestellten Fall sind die Frequenzbänder des DPDCH-Kanals 7 im Vergleich zu dem in Figur 1A dargestellten Fall vergrößert. Darüber hinaus werden die TPC-Symbole 9 mit einer größeren Bandbreite als in Figur 1A übertragen. Die Bandbreite für die Übertragung der TFI-Symbole 10 ist gegenüber Figur 1A verringert, was z.B. dann sinnvoll sein kann, wenn für den entsprechenden Teilnehmer nur eine kleine Anzahl unterschiedlicher Formate zulässig ist, so dass eine geringere Bandbreite als in Figur 1A zur sicheren Übertragung dieser Formatangabe erforderlich ist. Insgesamt ist gemäß Figur 1E die Gesamtbandbreite, welche dem Teilnehmer zur Verfügung gestellt wird, gegenüber den in Figur 1A - 1D dargestellten Fällen erhöht.

In Figur 2A und Figur 2B sind zwei unterschiedliche Ausführungsbeispiele für die Übertragung der Daten des DPCCH-Kanals und des DPDCH-Kanals gemäß einem OFDM-Vielfachzugriffsverfahren dargestellt, wobei die Daten sowohl des DPDCH-Kanals als auch des DPCCH-Kanals mit einer Vielzahl von Subträgern übertragen wird. Die im Rahmen der vorliegenden Erfindung vorgeschlagene Übertragung der Daten mit variabler Bandbreite bzw. Frequenzlage lässt sich mit einem OFDM-Vielfachzugriffsverfahren sehr leicht realisieren, da für $B_{pilot}$, $B_{TPC}$, $B_{TFI}$, $B_{sonst}$ und $B_{DPDCH}$ jeweils nur die Anzahl und/oder Anordnung der Subträger entsprechend variiert werden muss. In Figur 2A und Figur 2B ist jeder Subträger in Form eines schmalen Blocks dargestellt.

Bei dem in Figur 2A dargestellten Fall werden für die Pilot-Symbole 8 des DPCCH-Kanals insgesamt fünf Subträger verwendet, welche jedoch nicht frequenzmäßig zusammenhängend, sondern relativ gleichmäßig über das gesamte Frequenzband verteilt sind. Dem DPDCH-Kanal 7 sind insgesamt zwanzig Subträger zugeordnet, welche in zwei Frequenzfelder mit jeweils acht Subträgern und ein Frequenzband mit vier Subträgern angeordnet sind. Darüber hinaus werden für die TPC-Symbole 9, für die TFI-Symbole 10 und für die sonstigen Daten 11 des DPCCH-Kanals jeweils vier Subträger verwendet, welche wie in Figur 2A gezeigt hinsichtlich ihrer Frequenzlage angeordnet sind.

In Figur 2B ist eine Variante dieses Ausführungsbeispiels dargestellt, wobei für die Pilot-Symbole 8 des DPCCH-Kanals insgesamt vier Frequenzfelder bzw. Frequenzbündel mit jeweils zwei Subträgern verwendet werden, welche wiederum relativ gleichmäßig über das gesamte Frequenzband verteilt sind. Für die TPC-Symbole 9, die TFI-Symbole 10 und die sonstigen Daten 11 des DPCCH-Kanals wird hingegen jeweils lediglich ein Subträger verwendet, dessen Frequenzlage sich ebenfalls aus Figur 2B ergibt. Im Vergleich zu dem in Figur 2A dargestellten Fall werden gemäß Figur 2B wesentlich mehr Subträger dem DPDCH-Kanal 7 zugeordnet, wobei der DPDCH-Kanal 7 insgesamt 48 Subträger umfasst, welche auf drei nicht zusammenhängende Frequenzfelder verteilt sind. Die dem Teilnehmer insgesamt zur Verfügung gestellte Bandbreite, d.h. die Gesamtanzahl der Subträger, ist im Vergleich zu Figur 2A größer.

**Patentansprüche**

1. Verfahren zum Übertragen der Daten eines teilnehmerspezifischen Steuerkanals in einem Funksystem, wobei die Daten (8-11) des teilnehmerspezifischen Steuerkanals während einer bestehenden Verbindung von einem Sender (1) an einen Empfänger (6) des Funksystems mit einer Frequenzlage übertragen werden, welche adaptiv verändert wird.

2. Verfahren nach Anspruch 1,
**dadurch gekennzeichnet,**
**dass** von dem Sender (1) an den Empfänger (6) neben dem teilnehmerspezifischen Steuerkanal (8-11) auch ein teilnehmerspezifischer Datenkanal (7) übertragen wird, wobei die dem Sender (1) zugeordnete Gesamtbandbreite für die Übertragung des teilnehmerspezifischen Steuerkanals (8-11) und des teilnehmerspezifischen Datenkanals (7) adaptiv verändert wird.

3. Verfahren nach Anspruch 1,
**dadurch gekennzeichnet,**
**dass** von dem Sender (1) an den Empfänger (6) neben dem teilnehmerspezifischen Steuerkanal (8-11) auch ein teilnehmerspezifischer Datenkanal (7) übertragen wird, wobei die für die Übertragung des teilnehmerspezifischen Steuerkanals (8-11) und des teilnehmerspezifischen Datenkanals (7) dem Sender (1) zugewiesene Gesamtbandbreite konstant bleibt.

4. Verfahren nach einem der vorhergehenden Ansprüche,
   **dadurch gekennzeichnet,**
   **dass** der teilnehmerspezifische Steuerkanal eine erste Datengruppe (8) mit Daten zur empfängerseitigen Kanalschätzung, eine zweite Datengruppe (9) mit Daten zur empfängerseitigen Leistungsregelung, eine dritte Datengruppe (10) mit Daten zur Übertragung von Übertragungsformatinformationen und/oder eine vierte Datengruppe (11) zur Übertragung sonstiger Informationen umfasst,
   wobei die erste Datengruppe (8), die zweite Datengruppe (9), die dritte Datengruppe (10) und/oder die vierte Datengruppe (11) mit adaptiv veränderter Frequenzlage übertragen wird.

5. Verfahren nach Anspruch 4,
   **dadurch gekennzeichnet,**
   **dass** die Daten der ersten Datengruppe (8) zur empfängerseitigen Kanalschätzung in einem ersten Frequenzband, einem zweiten Frequenzband, einem dritten Frequenzband, einem vierten Frequenzband und einem fünften Frequenzband übertragen werden,
   wobei in einem zwischen dem ersten und dem zweiten Frequenzband liegenden Frequenzbereich Informationen eines teilnehmerspezifischen Datenkanals (7) des Senders (1) übertragen werden,
   wobei in einem zwischen dem zweiten Frequenzband und dem dritten Frequenzband liegenden Frequenzbereich die zweite Datengruppe (9) mit den Daten zur empfängerseitigen Leistungsregelung übertragen wird,
   wobei in einem zwischen dem dritten Frequenzband und dem vierten Frequenzband liegenden Frequenzbereich die dritte Datengruppe (10) mit den Daten zur Übertragung von Übertragungsformatinformationen übertragen wird, und
   wobei in einem zwischen dem vierten Frequenzband und dem fünften Frequenzband liegenden Frequenzbereich Informationen des teilnehmerspezifischen Datenkanals (7) des Sender (1) übertragen werden.

6. Verfahren nach Anspruch 4,
   **dadurch gekennzeichnet,**
   **dass** die Daten der ersten Datengruppe (8) zur empfängerseitigen Kanalschätzung in einem ersten Frequenzband, einem zweiten Frequenzband und einem dritten Frequenzband übertragen werden,
   wobei in einem zwischen dem ersten Frequenzband und dem zweiten Frequenzband liegenden Frequenzbereich Informationen eines teilnehmerspezifischen Datenkanals (7) des Senders (1) und die zweite Datengruppe (9) mit den Daten zur empfängerseitigen Leistungsregelung übertragen werden, und
   wobei in einem zwischen dem zweiten Frequenzband und dem dritten Frequenzband liegenden Frequenzbereich die dritte Datengruppe (10) mit den Daten zur Übertragung von Übertragungsformatinformationen und Informationen des teilnehmerspezifischen Datenkanals (7) des Senders (1) übertragen werden.

7. Verfahren nach Anspruch 4,
   **dadurch gekennzeichnet,**
   **dass** die Daten der ersten Datengruppe (8) zur empfängerseitigen Kanalschätzung in einem ersten Frequenzband, einem zweiten Frequenzband, einem dritten Frequenzband, einem vierten Frequenzband, einem fünften Frequenzband, einem sechsten Frequenzband und einem siebten Frequenzband übertragen werden,
   wobei in einem zwischen dem ersten Frequenzband und dem zweiten Frequenzband liegenden Frequenzbereich Informationen eines teilnehmerspezifischen Datenkanals (7) des Senders (1) übertragen werden,
   wobei in einem zwischen dem zweiten Frequenzband und dem dritten Frequenzband liegenden Frequenzbereich Informationen des teilnehmerspezifischen Datenkanals (7) des Senders (1) übertragen werden,
   wobei in einem zwischen dem dritten Frequenzband und dem vierten Frequenzband liegenden Frequenzbereich die zweite Daengruppe (9) mit den Daten zur empfängerseitigen Leistungsegelung übertragen wird,
   wobei in einem zwischen dem vierten Frequenzband und dem fünften Frequenzband liegenden Frequenzbereich die dritte Datengruppe (10) mit den Daten zur Übertragung von Übertragungsformatinformationen übertragen wird,
   wobei in einem zwischen dem fünften Frequenzband und dem sechsten Frequenzband liegenden Frequenzbereich Informationen des teilnehmerspezifischen Datenkanals (7) des Senders (1) übertragen werden, und
   wobei in einem zwischen dem sechsten Frequenzband und dem siebten Frequenzband liegenden Frequenzbereich Informationen des teilnehmerspezifischen Datenkanals (7) des Senders (1) übertragen werden.

8. Verfahren nach Anspruch 4,
   **dadurch gekennzeichnet,**
   **dass** die Daten der ersten Datengruppe (8) zur empfängerseitigen Kanalschätzung in einem ersten Frequenzband, einem zweiten Frequenzband, einem dritten Frequenzband, einem vierten Frequenzband und einem fünften Frequenzband übertragen werden,
wobei in einem zwischen dem ersten Frequenzband und dem zweiten Frequenzband liegenden Frequenzbereich Informationen eines teilnehmerspezifischen Datenkanals (7) des Senders (1) und Daten der zweiten Datengruppe (9) übertragen werden,
wobei in einem zwischen dem zweiten Frequenzband und dem dritten Frequenzband liegenden Frequenzbereich Daten der zweiten Datengruppe (9) übertragen werden,
wobei in einem zwischen dem dritten Frequenzband und dem vierten Frequenzband liegenden Frequenzbereich die Daten der dritten Datengruppe (10) übertragen werden, und
wobei in einem zwischen dem vierten Frequenzband und dem fünften Frequenzband liegenden Frequenzbereich Informationen des teilnehmerspezifischen Datenkanals (7) des Senders (1) übertragen werden.

9. Verfahren nach Anspruch 4,
**dadurch gekennzeichnet,**
**dass** die Daten der ersten Datengruppe (8) zur empfängerseitigen Kanalschätzung in einem ersten Frequenzband, einem zweiten Frequenzband, einem dritten Frequenzband und einem vierten Frequenzband übertragen werden,
wobei in einem zwischen dem ersten Frequenzband und dem zweiten Frequenzband liegenden Frequenzbereich Informationen eines teilnehmerspezifischen Datenkanals (7) des Senders (1) übertragen werden,
wobei in einem zwischen dem zweiten Frequenzband und dem dritten Frequenzband liegenden Frequenzbereich die zweite Datengruppe (9) mit den Daten zur empfängerseitigen Leistungsregelung übertragen wird, und
wobei in einem zwischen dem dritten Frequenzband und dem vierten Frequenzband liegenden Frequenzbereich die dritte Datengruppe (10) mit den Daten zur Übertragung von Übertragungsformatinformationen und Informationen des teilnehmerspezifischen Datenkanals (7) des Senders (1) übertragen werden.

10. Verfahren nach einem der vorhergehenden Ansprüche,
**dadurch gekennzeichnet,**
**dass** von dem Sender (1) die Daten des teilnehmerspezifischen Steuerkanals (8-11) an den Empfänger (6) mit einer Vielzahl von Subträgern, welche jeweils unterschiedlichen Frequenzbereichen zugeordnet sind, übertragen werden, und
wobei von dem Sender (1) zur Veränderung der Frequenzlage der Daten des teilnehmerspezifischen Steuerkanals (8-11) die Anzahl und/oder die Anordnung der für die Daten des teilnehmerspezifischen Steuerkanals (8-11) verwendeten Subträger adaptiv verändert wird.

11. Verfahren nach Anspruch 10 und Anspruch 4,
**dadurch gekennzeichnet,**
**dass** die Daten der ersten Datengruppe (8) zur empfängerseitigen Kanalschätzung in einem ersten Frequenzband, einem zweiten Frequenzband, einem dritten Frequenzband, einem vierten Frequenzband und einem fünften Frequenzband übertragen werden,
wobei in einem zwischen dem ersten Frequenzband und dem zweiten Frequenzband liegenden Frequenzbereich Informationen eines teilnehmerspezifischen Datenkanals (7) des Senders (1) übertragen werden,
wobei in einem zwischen dem zweiten Frequenzband und dem dritten Frequenzband liegenden Frequenzbereich Informationen des teilnehmerspezifischen Datenkanals (7) übertragen werden,
wobei in einem zwischen dem dritten Frequenzband und dem vierten Frequenzband liegenden Frequenzbereich die zweite Datengruppe (9) mit den Daten zur empfängerseitigen Leistungsregelung und die dritte Datengruppe (10) mit den Daten zur Übertragung von Übertragungsformatinformationen übertragen werden, und
wobei in einem zwischen dem vierten Frequenzband und dem fünften Frequenzband liegenden Frequenzbereich Informationen des teilnehmerspezifischen Datenkanals (7) des Senders (1) übertragen werden.

12. Verfahren nach Anspruch 11,
**dadurch gekennzeichnet,**
**dass** das erste Frequenzband, das zweite Frequenzband, das dritte Frequenzband, das vierte Frequenzband und das fünfte Frequenzband, welche der ersten Datengruppe (8) zugeordnet sind, jeweils durch einen Subträger gebildet sind,
**dass** den Informationen des teilnehmerspezifischen Datenkanals (7) insgesamt zwanzig Subträger zugeordnet sind, und
**dass** der zweiten Datengruppe (9) und der dritten Datengruppe (10) jeweils vier Subträger zugeordnet sind.

13. Verfahren nach Anspruch 10 wenn abhängig von Anspruch 4,

**dadurch gekennzeichnet,**

**dass** die Daten der ersten Datengruppe (8) zur empfängerseitigen Kanalschätzung in einem ersten Frequenzband, einem zweiten Frequenzband, einem dritten Frequenzband und einem vierten Frequenzband übertragen werden, wobei in einem zwischen dem ersten Frequenzband und dem zweiten Frequenzband liegenden Frequenzbereich Informationen eines teilnehmerspezifischen Datenkanals (7) des Senders (1) übertragen werden, wobei in einem zwischen dem zweiten Frequenzband und dem dritten Frequenzband liegenden Frequenzbereich die zweite Datengruppe (9) mit den Daten zur empfängerseitigen Leistungsregelung, die dritte Datengruppe (10) mit den Daten zur Übertragung von Übertragungsformatinformationen und Informationen des teilnehmerspezifischen Datenkanals (7) des Senders (1) übertragen werden, und wobei in einem zwischen dem dritten Frequenzband und dem vierten Frequenzband liegenden Frequenzbereich Informationen des teilnehmerspezifischen Datenkanals (7) des Senders (1) übertragen werden.

**14.** Verfahren nach Anspruch 13,
**dadurch gekennzeichnet,**
**dass** das erste Frequenzband, das zweite Frequenzband, das dritte Frequenzband und das vierte Frequenzband, welche der ersten Datengruppe (8) zugeordnet sind, jeweils durch zwei Subträger gebildet sind,
**dass** dem teilnehmerspezifischen Datenkanal (7) insgesamt 48 Subträger zugeordnet sind, und
**dass** der zweiten Datengruppe (9) und der dritten Datengruppe (10) jeweils ein Subträger zugeordnet ist.

**15.** Verfahren nach einem der vorhergehenden Ansprüche,
**dadurch gekennzeichnet,**
**dass** dem Sender (1) über einen empfangenen Übertragungskanal signalisiert wird, wie die Frequenzlage der Daten des teilnehmerspezifischen Steuerkanals (8-11) verändert werden sollen.

**16.** Verfahren nach Anspruch 15,
**dadurch gekennzeichnet,**
**dass** dem Sender (1) über einen empfangenen teilnehmerspezifischen Datenkanal (7) signalisiert wird, wie die Frequenzlage der Daten des teilnehmerspezifischen Steuerkanals (8-11) verändert werden sollen.

**17.** Vorrichtung zum Übertragen der Daten eines teilnehmerspezifischen Steuerkanals in einem Funksystem,
mit steuerbaren Sendemitteln (5) zum Übertragen der Daten des teilnehmerspezifischen Steuerkanals (8-11) an einen Empfänger (6), und
mit Steuermitteln (4), um in Abhängigkeit von Steuerinformationen die steuerbaren Sendemittel (5) derart anzusteuern, dass die Daten des teilnehmerspezifischen Steuerkanals (8-11) von den Sendemitteln (5) während einer bestehenden Verbindung mit dem Empfänger (6) mit einer in Abhängigkeit von den Steuerinformationen adaptiv eingestellten Frequenzlage übertragen werden.

**18.** Vorrichtung nach Anspruch 17,
**dadurch gekennzeichnet,**
**dass** Empfangsmittel (3) zum Empfangen eines in dem Funksystem übertragenen Übertragungskanals, welcher die Steuerinformationen zur adaptiven Veränderung der Frequenzlage der Daten des teilnehmerspezifischen Steuerkanals (8-11) enthält, vorgesehen ist.

**19.** Vorrichtung nach Anspruch 17 oder 18,
**dadurch gekennzeichnet,**
**dass** die Vorrichtung (1) eine Sendevorrichtung eines Mobilfunksystems ist.

**20.** Vorrichtung nach einem der Ansprüche 17-19,
**dadurch gekennzeichnet,**
**dass** die Vorrichtung (1) zur Durchführung des Verfahrens nach einem der Ansprüche 1-16 ausgestaltet ist.


**Claims**

**1.** Method for transmitting data of a subscriber-specific control channel in a radio system, wherein the data (8-11) of the subscriber-specific control channel is transmitted during an existing connection from a transmitter (1) to a receiver (6) of the radio system using a frequency position which is modified adaptively.

**2.** Method according to claim 1,
**characterised in that**
a subscriber-specific data channel (7) is also transmitted from the transmitter (1) to the receiver (6) in addition to the subscriber-specific control channel (8-11), with the overall bandwidth assigned to the transmitter (1) for transmission of the subscriber-specific control channel (8-11) and the subscriber-specific data channel (7) being modified adaptively.

**3.** Method according to claim 1,
**characterised in that**
a subscriber-specific data channel (7) is also transmitted from the transmitter (1) to the receiver (6) in addition to the subscriber-specific control channel (8-11), with the overall bandwidth assigned to the transmitter (1) for transmission of the subscriber-specific control channel (8-11) and the subscriber-specific data channel (7) remaining constant.

**4.** Method according to one of the preceding claims,
**characterised in that**
the subscriber-specific control channel comprises a first data group (8) with data for receiver-side channel evaluation, a second data group (9) with data for receiver-side power regulation, a third data group (10) with data for the transmission of transmission format information and/or a fourth data group (11) for the transmission of other information, with the first data group (8), the second data group (9), the third data group (10) and/or the fourth data group (11) being transmitted with an adaptively modified frequency position.

**5.** Method according to claim 4,
**characterised in that**
data of the first data group (8) for receiver-side channel evaluation is transmitted in a first frequency band, a second frequency band, a third frequency band, a fourth frequency band and a fifth frequency band,
with information of a subscriber-specific data channel (7) of the transmitter (1) being transmitted in a frequency range between the first and the second frequency bands,
with the second data group (9) with data for receiver-side power regulation being transmitted in a frequency range between the second frequency band and the third frequency band,
with the third data group (10) with data for the transmission of transmission format information being transmitted in a frequency range between the third frequency band and the fourth frequency band, and
with information of the subscriber-specific data channel (7) of the transmitter being transmitted in a frequency range between the fourth frequency band and the fifth frequency band.

**6.** Method according to claim 4,
**characterised in that**
data of the first data group (8) for receiver-side channel evaluation is transmitted in a first frequency band, a second frequency band and a third frequency band,
with information of a subscriber-specific data channel (7) of the transmitter (1) and the second data group (9) with data for receiver-side power regulation being transmitted in a frequency range between the first frequency band and the second frequency band, and
with the third data group (10) with data for the transmission of transmission format information and information of the subscriber-specific data channel (7) of the transmitter (1) being transmitted in a frequency range between the second frequency band and the third frequency band.

**7.** Method according to claim 4,
**characterised in that**
data of the first data group (8) for receiver-side channel evaluation is transmitted in a first frequency band, a second frequency band, a third frequency band, a fourth frequency band, a fifth frequency band, a sixth frequency band and a seventh frequency band,
with information of a subscriber-specific data channel (7) of the transmitter (1) being transmitted in a frequency range between the first frequency band and the second frequency band,
with information of the subscriber-specific data channel (7) of the transmitter (1) being transmitted in a frequency range between the second frequency band and the third frequency band,
with the second data group (9) with data for receiver-side power regulation being transmitted in a frequency range between the third frequency band and the fourth frequency band,
with the third data group (10) with data for the transmission of transmission format information being transmitted in a frequency range between the fourth frequency band and the fifth frequency band,
with information of the subscriber-specific data channel (7) of the transmitter (1) being transmitted in a frequency range between the fifth frequency band and the sixth frequency band, and
with information of the subscriber-specific data channel (7) of the transmitter (1) being transmitted in a frequency range between the sixth frequency band and the seventh frequency band.

8. Method according to claim 4,
**characterised in that**
data of the first data group (8) for receiver-side channel evaluation is transmitted in a first frequency band, a second frequency band, a third frequency band, a fourth frequency band and a fifth frequency band,
with information of a subscriber-specific data channel (7) of the transmitter (1) and data of the second data group (9) being transmitted in a frequency range between the first frequency band and the second frequency band,
with data of the second data group (9) being transmitted in a frequency range between the second frequency band and the third frequency band,
with data of the third data group (10) being transmitted in a frequency range between the third frequency band and the fourth frequency band, and
with information of the subscriber-specific data channel (7) of the transmitter (1) being transmitted in a frequency range between the fourth frequency band and the fifth frequency band.

9. Method according to claim 4,
**characterised in that**
data of the first data group (8) for receiver-side channel evaluation is transmitted in a first frequency band, a second frequency band, a third frequency band and a fourth frequency band,
with information of a subscriber-specific data channel (7) of the transmitter (1) being transmitted in a frequency range between the first frequency band and the second frequency band,
with the second data group (9) with data for receiver-side power regulation being transmitted in a frequency range between the second frequency band and the third frequency band, and
with the third data group (10) with data for the transmission of transmission format information and information of the subscriber-specific data channel (7) of the transmitter (1) being transmitted in a frequency range between the third frequency band and the fourth frequency band.

10. Method according to one of the preceding claims,
**characterised in that**
data of the subscriber-specific control channel (8-11) is transmitted by the transmitter (1) to the receiver (6) with a number of sub-carriers, each of which is assigned to different frequency ranges, and
with the number and/or arrangement of the sub-carriers used for the data of the subscriber-specific control channel (8-11) being modified adaptively by the transmitter (1) in order to modify the frequency position of the data of the subscriber-specific control channel (8-11).

11. Method according to claim 10 and claim 4,
**characterised in that**
data of the first data group (8) for receiver-side channel evaluation is transmitted in a first frequency band, a second frequency band, a third frequency band, a fourth frequency band and a fifth frequency band,
with information of a subscriber-specific data channel (7) of the transmitter (1) being transmitted in a frequency range between the first frequency band and the second frequency band,
with information of the subscriber-specific data channel (7) being transmitted in a frequency range between the second frequency band and the third frequency band,
with the second data group (9) with data for receiver-side power regulation and the third data group (10) with data for the transmission of transmission format information being transmitted in a frequency range between the third frequency band and the fourth frequency band, and
with information of the subscriber-specific data channel (7) of the transmitter (1) being transmitted in a frequency range between the fourth frequency band and the fifth frequency band.

12. Method according to claim 11,
**characterised in that**
the first frequency band, the second frequency band, the third frequency band, the fourth frequency band and the fifth frequency band, which are assigned to the first data group (8), are each formed by a sub-carrier,
twenty sub-carriers in total are assigned to the information of the subscriber-specific data channel (7), and

four sub-carriers are assigned in each instance to the second data group (9) and the third data group (10).

13. Method according to claim 10 when dependent on claim 4,
**characterised in that**
data of the first data group (8) for receiver-side channel evaluation is transmitted in a first frequency band, a second frequency band, a third frequency band and a fourth frequency band,
with information of a subscriber-specific data channel (7) of the transmitter (1) being transmitted in a frequency range between the first frequency band and the second frequency band,
with the second data group (9) with data for receiver-side power regulation, the third data group (10) with data for the transmission of transmission format information and
information of the subscriber-specific data channel (7) of the transmitter (1) being transmitted in a frequency range between the second frequency band and the third frequency band, and
with information of the subscriber-specific data channel (7) of the transmitter (1) being transmitted in a frequency range between the third frequency band and the fourth frequency band.

14. Method according to claim 13,
**characterised in that**
the first frequency band, the second frequency band, the third frequency band and the fourth frequency band, which are assigned to the first data group (8), are each formed by two sub-carriers,
48 sub-carriers in total are assigned to the subscriber-specific data channel (7), and
one sub-carrier is assigned in each instance to the second data group (9) and the third data group (10).

15. Method according to one of the preceding claims,
**characterised in that**
it is signalled to the transmitter (1) via a received transmission channel how the frequency position of data of the subscriber-specific control channel (8-11) is to be modified.

16. Method according to claim 15,
**characterised in that**
it is signalled to the transmitter (1) via a received subscriber-specific data channel (7) how the frequency position of data of the subscriber-specific control channel (8-11) is to be modified.

17. Device for transmitting data of a subscriber-specific control channel (8-11) in a radio system with controllable transmission means (5) for transmitting data of the subscriber-specific control channel (8-11) to a receiver (6), and with control means (4) in order to be able to activate the controllable transmission means (5) based on control information, so that data of the subscriber-specific control channel (8-11) is transmitted by the transmission means (5) during an existing connection to the receiver (6) with an adaptively adjusted frequency position based on the control information.

18. Device according to claim 17,
**characterised in that**
receiving means (3) are provided for receiving a transmission channel transmitted in the radio system and containing the control information for the adaptive modification of the frequency position of data of the subscriber-specific control channel (8-11).

19. Device according to claim 17 or 18,
**characterised in that**
the device (1) is a transmission device of a mobile radio system.

20. Device according to one of claims 17-19,
**characterised in that**
the device (1) is configured to perform the method according to one of claims 1-16.

**Revendications**

1. Procédé de transmission des données d'un canal de commande spécifique à un abonné dans un système radio, les données (8-11) du canal de commande spécifique à un abonné étant transmises pendant une connexion existante d'un émetteur (1) vers un récepteur (6) du système radio avec une position en fréquence qui subit une modification adaptative.

2. Procédé selon la revendication 1, **caractérisé en ce qu'**est également transmis, de l'émetteur (1) vers le récepteur (6), outre le canal de commande (8-11) spécifique à un abonné, un canal de données (7) spécifique à un abonné, la largeur de bande totale affectée à l'émetteur (1) pour la transmission du canal de commande (8-11) spécifique à un abonné et du canal de données (7) spécifique à un abonné subissant une modification adaptative.

3. Procédé selon la revendication 1, **caractérisé en ce qu'**est également transmis, de l'émetteur (1) vers le récepteur (6), outre le canal de commande (8-11) spécifique à un abonné, un canal de données (7) spécifique à un abonné, la largeur de bande totale allouée à l'émetteur (1) pour la transmission du canal de commande (8-11) spécifique à un abonné et du canal de données (7) spécifique à un abonné restant constante.

4. Procédé selon l'une des revendications précédentes, **caractérisé en ce que** le canal de commande spécifique à un abonné comprend un premier groupe de données (8) avec des données pour l'estimation de canal côté récepteur, un deuxième groupe de données (9) avec des données pour le réglage de puissance côté récepteur, un troisième groupe de données (10) avec des données pour la transmission d'informations de format de transmission et/ou un quatrième groupe de données (11) pour la transmission d'autres informations, le premier groupe de données (8), le deuxième groupe de données (9), le troisième groupe de données (10) et/ou le quatrième groupe de données (11) étant transmis avec une position en fréquence modifiée adaptativement.

5. Procédé selon la revendication 4, **caractérisé en ce que** les données du premier groupe de données (8) pour l'estimation de canal côté récepteur sont transmises dans une première bande de fréquence, une deuxième bande de fréquence, une troisième bande de fréquence, une quatrième bande de fréquence et une cinquième bande de fréquence,
des informations d'un canal de données (7) de l'émetteur (1), spécifique à un abonné, étant transmises dans une plage de fréquence située entre la première bande de fréquence et la deuxième bande de fréquence,
le deuxième groupe de données (9) avec les données pour le réglage de la puissance côté récepteur étant transmis dans une plage de fréquence située entre la deuxième bande de fréquence et la troisième bande de fréquence,
le troisième groupe de données (10) avec les données pour la transmission d'informations de format de transmission étant transmis dans une plage de fréquence située entre la troisième bande de fréquence et la quatrième bande de fréquence et
des informations du canal de données (7) de l'émetteur (1), spécifique à un abonné, étant transmises dans une plage de fréquence située entre la quatrième bande de fréquence et la cinquième bande de fréquence.

6. Procédé selon la revendication 4, **caractérisé en ce que** les données du premier groupe de données (8) pour l'estimation de canal côté récepteur sont transmises dans une première bande de fréquence, une deuxième bande de fréquence et une troisième bande de fréquence,
des informations d'un canal de données (7) de l'émetteur (1), spécifique à un abonné, et le deuxième groupe de données (9) avec les données pour le réglage de la puissance côté émetteur étant transmis dans une plage de fréquence située entre la première bande de fréquence et la deuxième bande de fréquence et
le troisième groupe de données (10) avec les données pour la transmission d'informations de format de transmission et des informations du canal de données (7) de l'émetteur (1), spécifique à un abonné, étant transmis dans une plage de fréquence située entre la deuxième bande de fréquence et la troisième bande de fréquence.

7. Procédé selon la revendication 4, **caractérisé en ce que** les données du premier groupe de données (8) pour l'estimation de canal côté récepteur sont transmises dans une première bande de fréquence, une deuxième bande de fréquence, une troisième bande de fréquence, une quatrième bande de fréquence, une cinquième bande de fréquence, une sixième bande de fréquence et une septième bande de fréquence,
des informations d'un canal de données (7) de l'émetteur (1), spécifique à un abonné, étant transmises dans une plage de fréquence située entre la première bande de fréquence et la deuxième bande de fréquence,
des informations du canal de données (7) de l'émetteur (1) spécifique à un abonné étant transmises dans une plage de fréquence située entre la deuxième bande de fréquence et la troisième bande de fréquence,
le deuxième groupe de données (9) avec les données pour le réglage de la puissance côté récepteur étant transmis dans une plage de fréquence située entre la troisième bande de fréquence et la quatrième bande de fréquence,
le troisième groupe de données (10) avec les données pour la transmission d'informations de format de transmission étant transmis dans une plage de fréquence située entre la quatrième bande de fréquence et la cinquième bande de fréquence,

des informations du canal de données (7) de l'émetteur (1), spécifique à un abonné, étant transmises dans une plage de fréquence située entre la cinquième bande de fréquence et la sixième bande de fréquence et des informations du canal de données (7) de l'émetteur (1), spécifique à un abonné, étant transmises dans une plage de fréquence située entre la sixième bande de fréquence et la septième bande de fréquence.

**8.** Procédé selon la revendication 4, **caractérisé en ce que** les données du premier groupe de données (8) pour l'estimation de canal côté récepteur sont transmises dans une première bande de fréquence, une deuxième bande de fréquence, une troisième bande de fréquence, une quatrième bande de fréquence et une cinquième bande de fréquence,
des informations d'un canal de données (7) de l'émetteur (1), spécifique à un abonné, et des données du deuxième groupe de données (9) étant transmises dans une plage de fréquence située entre la première bande de fréquence et la deuxième bande de fréquence,
des données du deuxième groupe de données (9) étant transmises dans une plage de fréquence située entre la deuxième bande de fréquence et la troisième bande de fréquence,
les données du troisième groupe de données (10) étant transmises dans une plage de fréquence située entre la troisième bande de fréquence et la quatrième bande de fréquence et
des informations du canal de données (7) de l'émetteur (1), spécifique à un abonné, étant transmises dans une plage de fréquence située entre la quatrième bande de fréquence et la cinquième bande de fréquence.

**9.** Procédé selon la revendication 4, **caractérisé en ce que** les données du premier groupe de données (8) pour l'estimation de canal côté récepteur sont transmises dans une première bande de fréquence, une deuxième bande de fréquence, une troisième bande de fréquence et une quatrième bande de fréquence,
des informations d'un canal de données (7) de l'émetteur (1), spécifique à un abonné, étant transmises dans une plage de fréquence située entre la première bande de fréquence et la deuxième bande de fréquence,
le deuxième groupe de données (9) avec les données pour le réglage de la puissance côté récepteur étant transmis dans une plage de fréquence située entre la deuxième bande de fréquence et la troisième bande de fréquence et
le troisième groupe de données (10) avec les données pour la transmission d'informations de format de transmission et des informations du canal de données (7) de l'émetteur (1), spécifique à un abonné, étant transmis dans une plage de fréquence située entre la troisième bande de fréquence et la quatrième bande de fréquence.

**10.** Procédé selon l'une des revendications précédentes, **caractérisé en ce que** les données du canal de commande (8-11) spécifique à un abonné sont transmises de l'émetteur (1) vers le récepteur (6) au moyen d'une pluralité de sous-porteuses qui sont respectivement attribuées à différentes plages de fréquence et le nombre et/ou la disposition des sous-porteuses utilisées pour les données du canal de commande (8-11) spécifique à un abonné subissant une modification adaptative par l'émetteur (1) pour modifier la position en fréquence des données du canal de commande (8-11) spécifique à un abonné.

**11.** Procédé selon la revendication 10 et la revendication 4, **caractérisé en ce que** les données du premier groupe de données (8) pour l'estimation de canal côté récepteur sont transmises dans une première bande de fréquence, une deuxième bande de fréquence, une troisième bande de fréquence, une quatrième bande de fréquence et une cinquième bande de fréquence,
des informations d'un canal de données (7) de l'émetteur (1), spécifique à un abonné, étant transmises dans une plage de fréquence située entre la première bande de fréquence et la deuxième bande de fréquence,
des informations du canal de données (7) spécifique à un abonné étant transmises dans une plage de fréquence située entre la deuxième bande de fréquence et la troisième bande de fréquence,
le deuxième groupe de données (9) avec les données pour le réglage de la puissance côté récepteur et le troisième groupe de données (10) avec les données pour la transmission d'informations de format de transmission étant transmis dans une plage de fréquence située entre la troisième bande de fréquence et la quatrième bande de fréquence et
des informations du canal de données (7) de l'émetteur (1), spécifique à un abonné, étant transmises dans une plage de fréquence située entre la quatrième bande de fréquence et la cinquième bande de fréquence.

**12.** Procédé selon la revendication 11, **caractérisé en ce que** la première bande de fréquence, la deuxième bande de fréquence, la troisième bande de fréquence, la quatrième bande de fréquence et la cinquième bande de fréquence, lesquelles sont affectées au premier groupe de données (8), sont respectivement constituées par une sous-porteuse, **en ce qu'**au total vingt sous-porteuses sont affectées aux informations du canal de données (7) spécifique à un abonné et **en ce que** respectivement quatre sous-porteuses sont affectées au deuxième groupe de données (9) et au troisième groupe de données (10).

**13.** Procédé selon la revendication 10, si dépendante de la revendication 4, **caractérisé en ce que** les données du premier groupe de données (8) pour l'estimation de canal côté récepteur sont transmises dans une première bande de fréquence, une deuxième bande de fréquence, une troisième bande de fréquence et une quatrième bande de fréquence,

des informations d'un canal de données (7) de l'émetteur (1), spécifique à un abonné, étant transmises dans une plage de fréquence située entre la première bande de fréquence et la deuxième bande de fréquence,

le deuxième groupe de données (9) avec les données pour le réglage de la puissance côté récepteur, le troisième groupe de données (10) avec les données pour la transmission d'informations de format de transmission et des informations du canal de données (7) de l'émetteur (1), spécifique à un abonné, étant transmis dans une plage de fréquence située entre la deuxième bande de fréquence et la troisième bande de fréquence et

des informations du canal de données (7) de l'émetteur (1), spécifique à un abonné, étant transmises dans une plage de fréquence située entre la troisième bande de fréquence et la quatrième bande de fréquence.

**14.** Procédé selon la revendication 13, **caractérisé en ce que** la première bande de fréquence, la deuxième bande de fréquence, la troisième bande de fréquence et la quatrième bande de fréquence, lesquelles sont affectées au premier groupe de données (8), sont respectivement constituées par deux sous-porteuses, **en ce qu'**au total 48 sous-porteuses sont affectées au canal de données (7) spécifique à un abonné et **en ce que** respectivement une sous-porteuse est affectée au deuxième groupe de données (9) et au troisième groupe de données (10).

**15.** Procédé selon l'une des revendications précédentes, **caractérisé en ce qu'**il est signalé à l'émetteur (1), via un canal de transmission reçu, comment doit être modifiée la position en fréquence des données du canal de commande (8-11) spécifique à un abonné.

**16.** Procédé selon la revendication 15, **caractérisé en ce qu'**il est signalé à l'émetteur (1), via un canal de données (7) reçu spécifique à un abonné, comment doit être modifiée la position en fréquence des données du canal de commande (8-11) spécifique à un abonné.

**17.** Dispositif de transmission des données d'un canal de commande spécifique à un abonné dans un système radio, comprenant des moyens d'émission commandables (5) pour la transmission des données du canal de commande (8-11) spécifique à un abonné à un récepteur (6) et des moyens de commande (4) pour commander les moyens d'émission commandables (5) en fonction d'informations de commande de manière telle que les données du canal de commande (8-11) spécifique à un abonné sont transmises par les moyens d'émission (5) pendant une connexion existante avec le récepteur (6) avec une position en fréquence réglée adaptativement en fonction des informations de commande.

**18.** Dispositif selon la revendication 17, **caractérisé en ce que** sont prévus des moyens de réception (3) pour recevoir un canal de transmission transmis dans le système radio, lequel canal contient les informations de commande pour la modification adaptative de la position en fréquence des données du canal de commande (8-11) spécifique à un abonné.

**19.** Dispositif selon la revendication 17 ou 18, **caractérisé en ce que** le dispositif (1) est un dispositif d'émission d'un système radio mobile.

**20.** Dispositif selon l'une des revendications 17 à 19, **caractérisé en ce que** le dispositif (1) est réalisé pour la mise en oeuvre du procédé selon l'une des revendications 1 à 16.

## FIG 1

# FIG 2

# FIG 3